(19) Europäisches Patentamt
European Patent Office
Office européen des brevets

(11) Publication number : **0 489 498 B1**

# (12) EUROPEAN PATENT SPECIFICATION

(45) Date of publication of patent specification : **11.05.94 Bulletin 94/19**

(51) Int. Cl.$^5$ : **E21B 43/27,** E21B 41/02, C23F 11/04

(21) Application number : **91310197.8**

(22) Date of filing : **05.11.91**

## (54) Acidizing subterranean formations.

(30) Priority : **05.11.90 US 608877**

(43) Date of publication of application : **10.06.92 Bulletin 92/24**

(45) Publication of the grant of the patent : **11.05.94 Bulletin 94/19**

(84) Designated Contracting States : **DE FR GB GR NL**

(56) References cited :
**EP-A- 0 130 006**
**EP-A- 0 139 567**
**EP-A- 0 169 651**
**US-A- 3 077 454**
**US-A- 4 493 775**

(73) Proprietor : **HALLIBURTON COMPANY**
**P.O. Drawer 1431**
**Duncan Oklahoma 73536 (US)**

(72) Inventor : **Walker, Michael L.**
**1813 Terrace Drive**
**Duncan, Oklahoma 73533 (US)**

(74) Representative : **Wain, Christopher Paul et al**
**A.A. THORNTON & CO. Northumberland House 303-306 High Holborn**
**London WC1V 7LE (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Jouve, 18, rue Saint-Denis, 75001 PARIS

## Description

The present invention relates to a method of acidizing a subterranean formation or well bore.

Acidizing and fracturing treatments using aqueous acidic solutions commonly are carried out in hydrocarbon-containing subterranean formations penetrated by a wellbore to accomplish a number of purposes, one of which is to increase the permeability of the formation. The increase in formation permeability normally results in an increase in the recovery of hydrocarbons from the formation.

In acidizing treatments, aqueous acidic solutions are introduced into the subterranean formation under pressure so that the acidic solution flows into the pore spaces of the formation. The acidic solution reacts with acid-soluble materials contained in the formation which results in an increase in the size of the pore spaces and an increase in the permeability of the formation.

In fracture acidizing treatments, one or more fractures are produced in the formation and the acidic solution is introduced into the fracture to etch flow channels in the fracture face. The acid also enlarges the pore spaces in the fracture face and in the formation.

The rate at which acidizing fluids react with reactive materials in the subterranean formation is a function of various factors including acid concentration, temperature, fluid velocity, the type of reactive material encountered and the like. Whatever the rate of reaction of the acidic solution, the solution can be introduced into the formation only a certain distance before it becomes spent. It is desirable to maintain the acidic solution in a reactive condition for as long a period of time as possible to maximize the permeability enhancement produced by the acidic solution.

A problem associated with acidizing subterranean formations is the corrosion by the acidic solution of the tubular goods in the well bore and the other equipment used to carry out the treatment. The expense of repairing or replacing corrosion damaged equipment is extremely high. The corrosion problem is exacerbated by the elevated temperatures encountered in deeper formations. The increased corrosion rate of the ferrous and other metals comprising the tubular goods and other equipment results in quantities of the acidic solution being neutralized before it ever enters the subterranean formation. The partial neutralization of the acid results in the production of quantities of metal ions which are highly undesirable in the subterranean formation.

Various methods have been proposed to decrease the corrosion problem related to acidizing treatments, however, the corrosion inhibitors employed generally are effective only at temperature levels below about 300°F (149°C). It would be desirable to provide a composition and method for acid treating a subterranean formation which overcomes at least some of the corrosion problem resulting from contact of the aqueous acidic treating solutions with ferrous and other metals.

According to the present invention, there is provided a method of acidizing a subterranean formation penetrated by a well bore whereby the corrosive effect of an acidic solution on metal present in said well bore is minimized, said method comprising contacting said formation with an aqueous acidic solution comprising hydrochloric acid which contains a corrosion-reducing effective amount of a corrosion inhibitor, said corrosion inhibitor consisting essentially of a blend of a source of antimony ions and a reaction product, said reaction product being prepared by reacting at least four reaction constituents together in the presence of from 0.8 to 1.2 equivalents of an aqueous mineral acid catalyst at a temperature in the range of from 140°F (60°C) to 250°F (121°C) for a time of from 4 hours to 48 hours to thereby yield said reaction product; wherein at least one of said four reaction constituents is one equivalent of a group (i) compound, at least one of said four reaction constituents is from 0.6 to 10 equivalents of a group (ii) compound, at least one of said four reaction constituents is from 0.5 to 10 equivalents of a group (iii) compound and at least one of said four reaction constituents is from 0.10 to 10 equivalents of a group (iv) compound, and further wherein each of said reaction constituents are from different compounds; and wherein said group (i) compounds have at least one reactive hydrogen atom and have no groups reactive under the conditions of reaction other than hydrogen and include compounds selected from amines, amides, aldehydes, nitrogen heterocycles, ketones, phenols, acetylenic alcohols and substituted derivatives thereof; said group (ii) compounds include a carbonyl group and have at least one hydrogen atom on the carbon atom adjacent to the carbonyl group; said group (iii) compounds are aldehydes, and said group (iv) compounds are selected from fatty compounds having from 5 to 60 carbon atoms, alkyl nitrogen heterocycles having at least one alkyl group having from 1 to 18 carbon atoms, and 3 to 9 carbon atoms in the heterocyclic ring structure, and admixtures thereof.

The invention also includes the aqueous acidic solution with corrosion inhibitor as defined above.

The composition and method of the present invention substantially reduce the corrosive effect of the acid on ferrous metals and other alloys without reducing the effectiveness of the acidic solution in treating the subterranean formation. The acidizing solution is introduced into a subterranean formation through a well bore at a flow rate and pressure sufficient to permit the acid to dissolve formation materials or foreign material in the vicinity of the well bore. The acidic solution comprises hydrochloric acid, alone or mixed together with one

or more acids. Acids that can be admixed with the hydrochloric acid include hydrofluoric acid, acetic acid, formic acid, sulfuric acid, phosphoric acid and mixtures thereof. The aqueous acidic solution should comprise hydrochloric acid in an amount of at least about 2% by weight of the acidizing solution.

The corrosion inhibitor preferably comprises a composition comprising an admixture of a Mannich reaction product and an antimony compound. The Mannich reaction product is a reaction product of effective amounts of certain active hydrogen containing compounds with organic carbonyl compounds having a least one hydrogen atom on the carbon atom alpha to the carbonyl group, and a fatty acid or other fatty compound or alkyl nitrogen heterocycle, preferably 2 or 4 alkyl substituted, and an aldehyde, and particularly those aldehydes which may be selected from the group consisting of aliphatic aldehydes containing from 1 to 16 carbon and aromatic aldehydes having no functional groups which are reactive under the reaction conditions other than aldehydes, which are reacted in the presence of an acid catalyst of sufficient strength to form the product. The antimony compound is an antimony compound that is capable of activation by the Mannich reaction product to yield an inhibitor which will effectively prevent the attack on metal by aqueous hydrochloric acid solutions. As shown by the Examples below, the Mannich reaction product significantly reduces the corrosive effect of a hydrochloric acid solution on ferrous or other metals in contact with the acid solution. The antimony compound is activated by the Mannich reaction product to substantially enhance the reduction in corrosion achieved. The exact mechanism by which the Mannich reaction product activates the antimony compound is not known at this time.

In certain applications it may be desirable, if not advantageous, to include at least one of the following classes of compounds in the inhibitor composition: a quantity of an acetylenic alcohol, a quaternary ammonium compound, a formic acid generating compound, a source of copper ions, a source of iodide, an aromatic hydrocarbon having high oil wetting characteristics, a surfactant to facilitate dispersion of the corrosion inhibitor in the acidic solution or mixtures of the same. These additives broaden the utility of the inventive inhibitor composition, enhance the effectiveness of the composition and/or facilitate use thereof.

In preparing the Mannich reaction product employed in the inhibitor of the present invention the active hydrogen compound containing at least one active hydrogen atom is reacted with a carbonyl compound having at least one hydrogen atom attached to the carbon atom alpha to the carbonyl group, an aldehyde, a fatty acid or other fatty material or alkyl nitrogen heterocycles and an acid catalyst at a temperature of from about 60°C (140°F) to about 121°C (250°F) for from 4 to about 48 hours. It is to be understood that the duration of the reaction may significantly exceed 48 hours without any adverse effects; however such extensive periods are not required to yield usable products.

The active hydrogen compounds which can be employed in accordance with the present invention are those organic ammonia derivatives having at least one hydrogen atom attached to nitrogen, as for example, primary and secondary amines, diamines, amides, ureas, thioureas, ammonia and ammonium salts, alicyclic amines, heterocyclic amines, aromatic amines and the like which contain no group reactive under the conditions of the reaction other than hydrogen attached to nitrogen or fully substituted amines in which at least one hydrogen atom adjacent to the amine is activated by the presence of the amine or aldehydes, or ketones, or phenols or acetylenic alcohols as hereinafter described. Some of such compounds which have been found effective are the normal alkylamines having from 1 to 20 or more carbon atoms in the alkyl substituent, as for example, methylamine, ethylamine, propylamine, butylamine, pentylamine, hexylamine, heptylamine, octylamine, nonylamine, decylamine, undecylamine, dodecylamine, tridecylamine, tetradecylamine, pentadecylamine, hexadecylamine, heptadecylamine, octadecylamine, nonaldecylamine, eicosylamine, and mixtures thereof. The isoalkyl and tertiaryalkylamines having up to 20 carbon atoms in the alkyl substituent such as for example, isopropylamine, isobutylamine, isoamylamine, and the like, tertiarybutylamine, tertiaryamylamine and the like; the dialkylamines having from 1 to 20 alkyl groups in the alkyl substituents such as dimethylamine, diethylamine, dipropylamine, dibutylamine, diamylamine, dihexylamine, diheptylamine, dioctylamine, didecylamine, dioctadecylamine and the like, as well as the diiso and tertiaryalkylamines, and mixtures thereof. The diamines which are useful as the active hydrogen compound include those diamines having from 1 to 20 carbon atoms in the alkyl portions thereof such as methylenediamine, ethylenediamine, propylenediamine, butylenediamine, diaminopentane (see pentylenediamine), diaminohexane (hexylenediamine) and the like. In addition other nitrogen- containing compounds having an active hydrogen on the nitrogen atom such as ammonia, ureas, thioureas, amides, ammonium salts and alicyclic, heterocyclic and aromatic amines are operative as the active hydrogen compound in accordance with the present invention. Thus, one can employ ammonia, urea, thiourea, 1-acetyl-2-thiourea, 1,3-di-(Rosin Amine D) thiourea, 1,3-dibutylthiourea and the like, acetamide, N-1-napthylacetamide, oxamide, adipamide, propionamide, thioacetamide, malonamide, formamide, alpha-cyanoacetamide, succinimide, n-butyramide, dimethylacetamide, N-methyl-acetamide, n-butyloxamate, hexanamide, phthalimide, n-valer-amide, isobutyramide, Armid 12 (95 percent dodecanamide, 4 percent tetradecanamide, 1 percent decanamide), N,N'-dibenzyldithiooxamide, dithiooxamide, Armid C

(amide of coco fatty acids), 1-napthaleneacetamide, Armid O (91 percent oleamide, 6 percent stearylamide, 3 percent linolamide), N,N'-dimethylthiooxamide, acetanilide, Armid HT (75 percent stearylamide, 22 percent palmitamide, 3 percent oleamide), nonanamide, N,N'dicyclohexyldithiooxamide, benzamide, B-isothioureidopropionic acid, N,N'bis(hydroxy-methyl)dithiooxamide, and the like, 2-methylpiperazine, morpholine, pyrrolidine, 2-aminoethylpiperazine, and the like, 2-naphthylamine, benzylamine, 2-aminopyridine, aniline and the like, 1,3-diphenyltriazene, and the like, ammonium chloride, monobasic ammonium phosphate, ammonium acetate, ammonium thiocyanate, ammonium oxalate, dibasic sodium ammonium phosphate and the like are effective sources of active hydrogen in accordance with the present invention. Fully substituted amines such as tetraethyl quaternary ammonium chloride and dimethyl dicoco quaternary ammonium chloride also may be utilized.

The carbonyl compounds which are operative in accordance with the present invention are those having at least one hydrogen atom on the carbon atom alpha to the carbonyl group. Some of such carbonyls found to be effective are the aliphatic and aryl substituted aliphatic ketones and mixtures thereof, as for example, acetophenone, mesityl oxide, 1-acetonaphthone, 1 part acetophenone plus 1 part acetone, p-methoxyacetophenone, propiophenone, p-chloroacetophenone, isophorone, tetrolophenone, 2,4-pentanedione, Ketosol (75 percent phenethyl alcohol, 25 percent acetophenone), 2-acetylcyclohexanone, 2-acetonaphthone, 2-thienylketone, methyl isobutylketone, n-butyrophenone, acetone, 3,4-dihydro-1-(2H)-naphthalenone, 2-heptanone, diacetone alcohol, undecanone-2, and the like such as the aldehydes defined hereinafter.

The class of fatty compounds found to be operative include the alkyl carboxylic acids, amines, amides and alcohols having from about 5 to about 60 carbon atoms, the olefinic carboxylic acids having from about 5 to about 60 carbon atoms and having from 1 or more unsaturated sites along the chain. In addition the various alkylene oxide adducts of the above fatty compounds have been found effective. Thus one can employ rendered animal fat, octanoic acid, myristic acid, pelargonic acid, abietic acid, acetic acid, lauric acid, formic acid, oleic acid, caprylic acid, tall oil acid, coco fatty acids + 15 moles ethylene oxide, oleic acid + 15 moles ethylene oxide, 70 percent rosin fatty acids + 15 moles ethylene oxide, tall oil + 4 moles propylene oxide + 8 moles ethylene oxide, tall oil + 6 moles propylene oxide + 12 moles ethylene oxide, tall oxide + 4 moles propylene oxide + 12 moles ethylene oxide, tall oil + 4 moles propylene oxide + 10 moles ethylene oxide, tall oil + 6 moles propylene oxide + 8 moles ethylene oxide, tall oil + 6 moles propylene oxide + 10 moles ethylene oxide, and the like. Further, alkyl aromatic nitrogen heterocycles are found to be operative. Thus, compounds such as 2-methyl pyridine, 4-methyl pyridine, 2-methyl quinoline, 4-methyl quinoline, alkyl pyridine and the like may be utilized.

The term "fatty" as used herein refers to the length of the carbon chain, which should consist of at least about 5 carbon atoms. The degree of saturation or unsaturation of the fatty compound is unimportant so long as any substituents present do not cause unwanted side reactions.

The class of aldehydes which are operative in accordance with the present invention include the aldehydes having from 1 to 16 or more carbon atoms. Thus one can employ formaldehyde, urotopine, benzaldehyde, heptanal, propanol, hexanal, octanal, decanal, hexadecanal, cinnamaldehyde and the like. The aldehydes also include any aldehyde generating materials under the conditions of the reaction such as paraformaldelyde, paraldehyde, acetals, hemiacetals, sulfite addition products and the like.

The mineral acid catalyst which is employed in preparing the Mannich reaction product can be, for example, hydrochloric acid, sulfuric acid, methanesulfonic acid, phosphoric acid and the like. The acid catalyst can comprise substantially any acid which is a strong proton donor. The specific quantity of acid utilized can vary over wide ranges. Any quantity can be utilized that does not result in the occurrence of undesirable side reactions under the reaction conditions.

Additional substituents which can be substituted for the various constituents of the reaction product are disclosed in U.S. Patents 3,630,933; 3,932,296; 3,077,454; 2,758,970; 2,489,668; 4,493,775; 3,634,270; and 3,094,490 and European Patent Application numbers 0 276 879 A1 and 0 212 752 A1.

A preferred method of preparing the Mannich reaction product employed in the inhibitor composition of the present invention is to react about 1 equivalent of active hydrogen compound and from about 0.5 to about 10 equivalent of aldehyde and from about 0.6 to about 10 equivalents of carbonyl compound and from about 0.8 to about 1.2 equivalents of mineral acid catalyst with from about 0.15 to about 10 equivalents of fatty compound at a temperature of from about 60°C (140°F) to about 116°C (240°F) for from about 4 to 48 hours. Upon completion of the reaction, additional fatty material may be added with stirring to bring the ratio of fatty material to a level of from about 2 to about 20 equivalents. The term "equivalent" as used herein is defined as the number of moles of a compound that are present times the number of reactive sites on the compound under the conditions of the reaction.

The antimony compound and any of the optional constituents are admixed with the Mannich reaction product or admixed in the acidic solution.

The antimony compound which is employed in the corrosion inhibitor composition of the present invention can comprise any antimony compound which is activated by the Mannich reaction product of the corrosion inhibitor to cause the corrosion inhibitor to substantially reduce the corrosive effect of the acid in the aqueous acidic solution on ferrous or other metals in contact with the acid solution. As shown by Example III below, the antimony compound by itself does not significantly reduce the corrosive effect of the acid. As used herein and in the appended claims, an antimony compound that is "activated" or "capable of activation" by the Mannich reaction product is an antimony compound that is made active or more active by the Mannich reaction product in reducing the corrosive effect of the acid on ferrous or other metals in contact with the acid solution beyond the reduction in the corrosive effect achieved by the Mannich reaction product alone. The antimony compound is preferably soluble in the aqueous acidic solution, at least under the conditions in which the aqueous acidic solution is used.

The antimony compound can comprise, for example, antimony trioxide, antimony pentoxide, antimony trichloride, antimony pentachloride, potassium antimony tartrate and other alkali metal salts thereof, antimony tartrate, antimony trifluoride, antimony pentafluoride, antimony citrate, potassium pyroantimonate and other alkali metal salts thereof, antimony adducts of ethylene glycol, solutions containing (i) ethylene glycol, (ii) water and (iii) the oxidized product of hydrogen peroxide and antimony trioxide or any other trivalent antimony compound and the like.

The acetylenic alcohols which may be employed in the present invention may suitably include substantially any of the acetylenic compounds having the general formula:

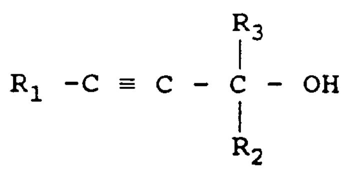

wherein $R_1$, $R_2$ and $R_3$ are hydrogen, alkyl, phenyl, substituted phenyl or hydroxyalkyl radicals. Preferably, $R_1$ comprises hydrogen. Preferably, $R_2$ comprises hydrogen, methyl, ethyl or propyl radicals. Preferably, $R_3$ comprises an alkyl radical having the general formula $C_nH_{2n}$ where n is an integer from 1 to 10. The acetylenic alcohols(s), in certain applications, further reduces the corrosive effect of the acid.

Some examples of acetylenic alcohols which can be employed in accordance with the present invention are, for example, methyl butynol, methyl pentynol, hexynol, ethyl octynol, propargyl alcohol, benzylbutynol,ethynylcyclohexanol and the like. Preferred alcohols are hexynol, propargyl alcohol, methyl butynol and ethyl octynol.

The quaternary aromatic ammonium compounds which may be employed in the present invention comprise aromatic nitrogen compounds which may be illustrated by alkyl pyridine-N-methyl chloride quaternary, alkyl pyridine-N-benzyl chloride quaternary, alkylquinoline-N-benzyl chloride quaternaries, alkylisoquinoline quaternaries, benzoquinoline quaternaries, chloromethylnaphthalene quaternaries of the above, admixtures of the compounds and the like. The alkyl group associated with the pyridine compounds can contain from 0 to 6 carbon atoms and with the quinoline compounds can contain from 0 to 8 carbon atoms. The quaternary ammonium compound(s) also function to reduce the corrosive effect of the acid in certain applications.

The hydrocarbon compound which may be employed can comprise substantially any aromatic compound which exhibits high oil-wetting characteristics. The aromatic hydrocarbon compound can comprise, for example, xylenes, saturated biphenyl-xylenes admixtures, heavy aromatic naphtha, heavy aromatic solvent, tetralene, tetrahydroquinoline, tetrahydronaphthalene and the like.

Additional additives which can be present in the corrosion inhibitor can comprise, for example, a solvent such as an alkanol to assist in maintaining the constituents of the corrosion inhibitor as a homogeneous admixture.

Alkanols which can be employed in the present invention are, for example, methyl, ethyl, propyl, isopropyl, butyl, pentyl, hexyl, heptyl, octyl and the higher liquid members of these aliphatic alcohols. Preferably, the quantity of alkanol employed is that which merely is sufficient to maintain the constituents in homogeneous admixture as excess quantities have no demonstrable effect on the effectiveness of the corrosion inhibitor. Preferably, the alkanol comprises less than about fifteen percent by volume of the corrosion inhibitor composition to avoid unnecessary dilution of the inhibitor composition.

The corrosion inhibitor also can include a surfactant which facilitates dispersion of the corrosion inhibitor in the aqueous acidic solution. Nonionic surfactants are preferred for use in the corrosion inhibitor.

The nonionic surfactant can comprise an ethoxylated oleate, tall oils or ethoxylated fatty acids. The 8 to

20 moles of ethylene oxide adducts of octyl phenol, nonylphenol, tridecyl phenol and the like are preferred. Sufficient nonionic surfactant is admixed with the other constituents of the corrosion inhibitor to facilitate dispersion of the corrosion inhibitor in the aqueous acidic solution. Preferably, the surfactant comprises less than about 20 percent by volume of the corrosion inhibitor composition to avoid unnecessary dilution of the inhibitor composition.

The Mannich reaction product comprises in the range of from about 3% to about 75% by weight of the corrosion inhibitor. More preferably, the Mannich reaction product comprises from about 35% to about 70% by weight of the corrosion inhibitor. The antimony compound may be present in the corrosion inhibitor in an amount sufficient to obtain a solution having a concentration of from about 0.0001 to about 0.1 molar in the aqueous acidic solution. Preferably, the antimony compound is present in an amount sufficient to provide a concentration in the aqueous acidic solution of from about 0.0007 to about 0.04 and most preferably of about 0.001 to about 0.04 molar. It is to be understood that larger quantities may be utilized but such use is generally unnecessary. Excessive amounts have no demonstrable effect except at highly elevated temperatures.

The acetylenic alcohol, when present, can comprise from about 4 to about 80% by weight of the corrosion inhibitor. The quaternary aromatic ammonium compound, when present, can comprise from about 6 to about 80% by weight of the corrosion inhibitor.

The aromatic hydrocarbon compound, when present, can comprise from about 0.5 to about 40% by weight of the corrosion inhibitor.

The method of the present invention can be carried out by admixing the aqueous fluid with the acid to provide an acidic solution of a desired concentration. The corrosion inhibitor then is admixed with the solution in an amount sufficient to substantially reduce the corrosion rate of the acid on metal surfaces in contact or to be contacted with the acid. The amount of corrosion inhibitor utilized in the practice of the present invention can vary over a substantial range. Preferably, the inhibitor composition is present in an amount of from about 1 to about 20 volumes per 1000 volumes of aqueous acidic solution. The quantity of corrosion inhibitor will depend upon the concentration of the acid employed and the temperature at which the acidic solution will contact the metal surfaces.

The aqueous acidic solution of the present invention can be prepared in any suitable tank equipped with suitable mixing means well known to individuals skilled in the art. The solution may be transferred either at a controlled rate directly into the well bore or into a convenient storage tank for injection down the well bore.

The aqueous acidic solution is introduced into the subterranean formation whereby either foreign material in the well bore or in the formation or formation materials are dissolved to thereby increase the permeability of the formation. The increased permeability permits better flow of hydrocarbon fluids through the formation and into its well bore. The pumping rate and pressure utilized will depend upon the characteristics of the formation and whether or not fracturing of the formation is desired. After the aqueous acidic solution has been injected, the well may be shut in and allowed to stand for a period of several hours or more depending on the type of acid employed and the formation treated. If there is pressure on the well, pressure then can be released and the spent or at least partially spent aqueous acidic solution, containing salts formed by the reaction of the acid, is permitted to flow back into the well bore and is pumped or flowed to the surface for appropriate disposal. The well then can be placed on production or used for other purposes.

In one preferred embodiment the Mannich reaction product is prepared by adding the following compounds to a reaction vessel on the basis of one mole of thiourea, 2 moles of acetophenone, 1.33 moles of oleic acid, 4.4 moles of formaldehyde and one mole of hydrochloric acid. The reactor contents are stirred to dissolve the thiourea and then heated under reflux conditions at a temperature of about 104°C (220°F) for about 16 hours. The reaction product is separated from the residue in the reactor vessel as a separated nonaqueous layer in the vessel, which forms upon cooling of the reaction mixture.

The following examples are illustrative of the present invention.

**EXAMPLE I**

The following composition was charged to a 250 ml. glass reaction flask equipped with a stirrer and reflux condenser.

| | |
|---|---|
| Thiourea | 0.15 moles |
| Acetophenone | 0.3 moles |
| 37% formaldehyde | 0.66 moles |
| Concentrated HCl | 0.15 moles |
| Oleic acid | 0.2 moles |

The materials may be added in any order to the reaction vessel. The charge is stirred and refluxed gently for about 16 hours while stirring. The product then is allowed to stand for about 0.5 hours during which time

the temperature dropped from about 104°C (220°F) to about 49°C (120°F) and an aqueous layer separated in the flask. The crude reaction product, organic layer, was separated and stored.

An inhibitor blend was prepared by adding 4 ml of the reaction mixture to 4 ml of methylnaphthylquinolinium chloride solution and 1.5 ml of nonylphenol ethoxylated with about 20 moles of ethylene oxide unless otherwise designated. A solution of 100 ml of 15% hydrochloric acid was prepared to which was added 1 ml of the foregoing blend and in some instances antimony was added to the solution to provide a concentration of about 0.018 moles/liter. The source of antimony was the reaction product of antimony trioxide and hydrogen peroxide in ethylene glycol and water.

The corrosion loss determination in $kg/m^2$ ($lb/ft^2$) then was made as follows: a coupon was cut from API N 80 steel oil field tubing and the surface area was determined. The coupon was weighed and placed in the acidic solution containing the inhibitor. The solution and coupon then was placed in an autoclave which was placed in a heating jacket preset to provide an autoclave temperature of about 149°C (300°F) and exposed for 2 hours.

At the end of this time the coupon was removed, weighed and the corrosion loss calculated from the weight lost. To evaluate the scope of available substituents for use in the various method of the present invention, various compounds were substituted for the constituents in the inhibitor reaction mixture. The substitutions were made on a molar basis except as noted in the Tables.

TABLE I

| Substitutes for Mineral Acid in Reaction Mixture | | |
|---|---|---|
| | Corrosion Loss, $lb/ft^2$ * Reaction Product of Present Invention | |
| Compound | Without Antimony | With Antimony |
| Hydrochloric Acid | 0.053 | 0.005 |
| Sulfuric Acid | 0.040 | 0.006 |
| Phosphoric Acid | 0.037 | 0.004 |
| Methanesulfonic Acid | 0.089 | 0.009 |
| Formic Acid | - | 0.627 |
| Acetic Acid | - | 0.337 |

The corrosion loss for a blank coupon without any inhibitor present is about 0.733 $lb/ft^2$

*$1 lb/ft^2 = 4.88 kg/m^2$

**TABLE II**

| Substitutes for Fatty Acid in Reaction Mixture | | |
|---|---|---|
| | Corrosion Loss, $lb/ft^2$ * Reaction Product of Present Invention | |
| Compound | Without Antimony | With Antimony |
| Oleic Acid | 0.053 | 0.005 |
| Ethomeen C[1] | - | 0.004 |
| NEOFAT 8S[2] | - | 0.003 |
| Actinol | 0.044 | 0.004 |
| Ethomid 0-17[3] | 0.043 | 0.006 |
| Armid O[4] | - | 0.006 |
| 2-Picoline | - | 0.004 |
| Oleyl alcohol | 0.098 | 0.006 |
| Xylene | - | 0.193 |
| Pine oil | 0.063 | 0.101 |
| Pyridine | - | 0.258 |

[1] Cocoamine sold by Akzo Chemie America
[2] Commercially pure caprylic acid sold by Akzo Chemie America
[3] 7 moles of Ethylene oxide on Armid O sold by Akzo Chemie America
[4] Octadecenylamide sold by Akzo Chemie America

*$1 lb/ft^2 = 4.88 kg/m^2$

**TABLE III**

| Substitutes for Active Hydrogen Containing Compound in Reaction Mixture | | |
|---|---|---|
| | Corrosion Loss, lb/ft² * Reaction Product of Present Invention | |
| Compound (moles)[1] | Without Antimony | With Antimony |
| Thiourea | 0.053 | 0.005 |
| Urea | - | 0.002 |
| Guanidine carbonate | 0.153 | 0.004 |
| Acetamide (0.3) | 0.140 | 0.089 |
| Ammonium chloride | - | 0.004 |
| 2-picoline (0.3) | 0.119 | 0.007 |
| Quinaldine (0.3) | 0.216 | 0.003 |
| Phenol (0.3) | 0.313 | 0.004 |
| Morpholine (0.3) | 0.141 | 0.005 |
| Hexahydropyrimidine-2-thione | 0.132 | 0.005 |
| Dibutyl amine (0.3) | 0.274 | 0.006 |
| Cocoamine (0.3) | 0.305 | 0.006 |
| 2,6-lutidine (0.3) | 0.722 | 0.012 |
| Butylamine | - | 0.011 |
| Dicocoamine (0.3) | - | 0.011 |
| Oleamide (0.3) | 0.231 | 0.011 |
| Tributylamine (0.6) | 0.750 | 0.012 |
| Tetraethylammonium chloride | 0.141 | 0.011 |
| 4-picoline (0.6) | 0.718 | 0.010 |
| Quinoline (0.6) | 0.805 | 0.016 |

[1] molar ratio described in Example I are utilized unless otherwise specified

*1 $lb/ft^2$ = 4.88 $kg/m^2$

**TABLE III - (continued)**

| Substitutes for Active Hydrogen Containing Compound in Reaction Mixture | | |
|---|---|---|
| | Corrosion Loss, lb/ft[2] * Reaction Product of Present Invention | |
| Compound (moles)[1] | Without Antimony | With Antimony |
| Butanal (0.3) | 0.816 | 0.008 |
| Heptanal (0.3) | 0.516 | 0.011 |
| Methylnonylketone (0.3) | 0.726 | 0.012 |
| Formamide (0.3) | 0.180 | 0.140 |
| Rubeanic acid[2] | 0.040 | 0.132 |
| Pyridine (0.3) | 0.671 | 0.215 |
| 2-hydroxy-1,4-Xylene (0.3) | - | 0.233 |
| Hexahydropyrimidine-2-thione (0.3) | - | 0.068 |
| Butylamine (0.3) | - | 0.231 |
| Tributylamine (0.3) | - | 0.267 |
| Quinoline still residues (0.3) | - | 0.220 |
| Quinoline (0.3) | - | 0.662 |
| Diethylamine (0.3) | - | 0.424 |
| Ethanolamine (0.3) | - | 0.738 |
| 2,6 lutidine | - | 0.526 |
| Acrolein (0.3) | - | 0.547 |
| 3-picoline (0.3) | - | 0.665 |
| Pyridine (0.6) chloride | - | 0.745 |
| Acrolein (0.6) | - | 0.702 |

[2] Failure of this compound is believed to be due to lack of solubility of the compound in the reaction media.

*1lb/ft$^2$ = 4.88 kg/m$^2$

**TABLE IV**

| Substitutes for Ketone in Reaction Mixture Reaction Mixture | | |
|---|---|---|
| | Corrosion Loss, lb/ft² * Reaction Product of Present Invention | |
| Compound (moles)[1] | Without Antimony | With Antimony |
| Acetophenone | 0.053 | 0.005 |
| 2-butanone | - | 0.006 |
| Cyclohexanone | 0.055 | 0.012 |
| 2,4 pentanedione | 0.253 | 0.006 |
| Undecone | 0.053 | 0.004 |
| Formylpiperdine | 0.113 | 0.006 |
| Ethomide O-17[1] | 0.043 | 0.006 |
| Heptanal | 0.053 | 0.004 |
| Levulenic acid | 0.205 | 0.006 |
| Hexynol | 0.107 | 0.007 |
| Ethyl octynol | 0.037 | 0.008 |
| 4-picoline | 0.034 | 0.007 |
| Butanal | 0.207 | 0.007 |
| 2-picoline | 0.204 | 0.005 |
| Dibutylamine | 0.070 | 0.007 |
| Trihexylamine (0.6) | 0.136 | 0.007 |
| Dimethyldicocoamine (0.3) | 0.074 | 0.005 |
| Formamide (0.3) | 0.730 | 0.583 |
| Tripropylamine (0.3) | 0.662 | 0.255 |
| Tripropylamine (0.6) | 0.698 | 0.161 |
| Quinaldine (0.3) | 0.709 | 0.363 |
| Quinoline (0.3) | 0.741 | 0.278 |

[1] 7 moles of ethylene oxide on Armid O sold by Akzo Chemie America

* 1 $lb/ft^2$ = 4.88 $kg/m^2$

**TABLE V**

| Substitutes for Formaldehyde in Reaction Mixture | | |
|---|---|---|
| | Corrosion Loss, $lb/ft^2$ * Reaction Product of Present Invention | |
| Compound | Without Antimony | With Antimony |
| Formaldehyde | 0.053 | 0.005 |
| Propanal | 0.204 | 0.003 |
| Butanal | 0.828 | 0.004 |
| Heptanal | 0.674 | 0.003 |
| Formaldehyde-bisulfite | 0.042 | 0.006 |
| Paraformaldehyde | 0.103 | 0.007 |
| Benzaldehyde | 0.064 | 0.005 |

*1 $lb/ft^2$ = 4.88 $kg/m^2$

The foregoing data clearly illustrate the substantially improved corrosion reduction achieved through use of the composition of the present invention containing antimony. The data also illustrates the operability of the various described classes of substitutes for the various compounds in the composition.

**EXAMPLE II**

To illustrate the utility of antimony in the various forms in which it is available, the following tests were performed. The corrosion loss determination was made in the same manner as Example I and the Mannich reaction product of Example I was utilized in formulating the inhibitor blend as described therein. A solution of 100 ml of 15% hydrochloric acid was prepared to which was added 1 ml. of the foregoing blend and 1.8 millimoles of antimony ion provided by an antimony compound as set forth hereinafter. The acid was heated to 149°C (300°F) and a coupon of API N 80 steel was exposed for 2 hours to the heated acid in the manner described in Example 1. The results are set forth in Table VI, below. A blank test was performed for comparison purposes in which no antimony compound was added to the reaction product of Example I admixed with the acid solution.

TABLE VI

| Antimony Source | Oxidation State | Corrosion loss, $lb/ft^2$ * |
|---|---|---|
| None | - | 0.053 |
| Potassium antimony tartrate | III | 0.004 |
| Antimony trioxide | III | 0.004 |
| Antimony trifluoride | III | 0.002 |
| Antimony pentafluoride | V | 0.005 |
| Potassium pyroantimonate | V | 0.007 |
| Antimony trichloride | III | 0.004 |
| Antimony pentachloride | V | 0.004 |
| Solution containing ethylene glycol, water & the oxidized product of hydrogen peroxide & antimony trioxide | V | 0.004 |

*1 $lb/ft^2$ = 4.88 $kg/m^2$

The data clearly illustrates the enhanced corrosion protection achieved in the corrosion inhibitor blend upon incorporation of an antimony compound which is activated by the other constituents of the blend.

EXAMPLE III

Additional tests were performed to show that antimony alone in a hydrochloric acid solution does not reduce the corrosive effects of the acid on metal surfaces. Corrosion losses experienced by metal coupons placed in hydrochloric acid solutions, with and without antimony present, were determined. The corrosion loss determinations were made in the manner described in Example I.

In each test, a premeasured and preweighed coupon of API N 80 steel oil field tubing was placed in approximately 100 ml of a 15% hydrochloric acid solution. In the tests in which antimony was employed, a solution containing ethylene glycol, water and the oxidized product of hydrogen peroxide and antimony trioxide was added to the acid solution to provide a concentration of antimony in the solution of 0.018 moles/liter. The acid solution and coupon were then placed in an autoclave which was placed in a heating jacket preset to provide an autoclave temperature of about either 66°C (150°F), 93°C (200°F) or 149°C (300°F), and the acid solution and coupon were exposed to one of the above temperatures for two hours. At the end of the two hour period, the coupon was removed and weighed, and the corrosion loss was calculated from the weight lost.

The results of these tests are set forth in Table VII below.

TABLE VII

| Autoclave Temperature °C (°F.) | Corrosion Loss ($lb/ft^2$) (I) 15% HCl | 15% HCl with 0.018 moles/liter antimony |
|---|---|---|
| 66 (150) | 0.069 | 0.112 |
| 93 (200) | 0.330 | 0.381 |
| 149 (300) | -- * | 0.779 |

* As indicated in Example I, the corrosion loss for a blank coupon without any inhibitor present is about 0.733 $lb/ft^2$ when placed in 15% HCl for 2 hours at 149°C (300°F).

(I) 1 $lb/ft^2$ = 4.88 $kg/m^2$

The results shown in Table VII clearly demonstrate that the presence of antimony in the solution did not reduce the corrosive effects of the 15% hydrochloric acid on the metal coupons at any of the various temperatures. As shown by reference to the data in Table VII and Table I of Example I, a significant difference with respect to corrosion inhibition upon a metal surface is shown by a 15% hydrochloric solution containing antimony alone, the Mannich reaction product of the present invention without antimony, and the Mannich reaction product when combined with antimony, which difference is clearly not merely an additive effect.

EXAMPLE IV

Further tests were carried out to illustrate the effectiveness of the inventive corrosion inhibitor when an acetylenic alcohol, quaternary ammonium compound and/or aromatic hydrocarbon having high oil wetting characteristics are employed therewith. In addition, tests were carried out to compare the effectiveness of the inventive corrosion inhibitor to the effectiveness of a prior art corrosion inhibitor that utilizes an admixture of an acetylenic alcohol, quaternary ammonium compound and aromatic hydrocarbon together with antimony. The prior art composition tested is described in U.S. Patent No. 4,498,997 to Walker.

The Mannich reaction product described in Example I was utilized in forming the inventive corrosion inhibitor used in the tests. An inhibitor blend was prepared by adding the reaction product to a quantity of nonylphenol ethoxylated with about 20 moles of ethylene oxide (a dispersing agent). A solution of 100 ml of 15% hydrochloric acid was prepared to which was added 1.0 ml of the foregoing blend.

The acetylenic alcohol employed in the tests was propargyl alcohol. The quaternary ammonium compound utilized was benzylquinolinium chloride. The aromatic hydrocarbon having high oil wetting characteristics was heavy aromatic naphtha.

The prior art corrosion inhibitor tested was prepared by admixing propargyl alcohol, benzylquinolinium chloride, heavy aromatic naphtha and nonylphenol ethoxylated with about 20 moles of ethylene oxide (dispersing agent) to form an inhibitor blend. A solution of 100 ml of 15% hydrochloric acid was prepared to which was added 1.0 ml of the inhibitor blend.

Tests were conducted with and without antimony. In the tests employing antimony, a solution containing ethylene glycol, water and the oxidized product of hydrogen peroxide and antimony trioxide was added to the acid solution in an amount sufficient to impart 1.8 millimoles of antimony thereto.

Corrosion loss tests were carried out in the manner described in Example I. In each test, a premeasured and preweighed coupon of API N 80 steel oil field tubing was placed in the acid solution containing the inhibitor. The solution and coupon were then placed in an autoclave which was placed in a heating jacket preset to provide an autoclave temperature of about 149°C (300°F), and the solution and coupon were exposed at that temperature for 2 hours. At the end of the 2 hour period, the coupon was removed and weighed, and the corrosion loss was calculated from the weight lost.

The results of these tests are shown by Table VIII below:

TABLE VIII

| Inventive Corrosion Inhibitor (mls) | | | | | Corrosion Loss ($lb/ft^2$)* | |
|---|---|---|---|---|---|---|
| | | | | | Column A | Column B |
| | | | | | Without Antimony | With Antimony 1.8 Millimoles |
| MPR[1] | Dispers. Agent[2] | Acet. OH | Quat. Amm. Cmpd.[3] | Aromatic H/C[4] | | |
| 8 | 2 | -- | -- | -- | 0.207 | 0.006 |
| 5 | 2 | 5[5] | -- | -- | 0.043 | 0.006 |
| 5 | 2 | -- | 5 | -- | 0.050 | 0.005 |
| 5 | 2 | -- | -- | 5 | 0.185 | 0.008 |
| 4 | 1 | 2[5] | 3 | 5 | 0.032 | 0.005 |
| 4 | 2 | --* | 3 | 3 | 0.129 | 0.006 |

| Prior Art Corrosion Inhibitor (mls) | | | | | |
|---|---|---|---|---|---|
| Dispers. Agent[2] | Acet. OH | Quat. Amm. Cmpd.[3] | Aromatic H/C[4] | Column A | Column B |
| 2 | 4[5] | 3 | 3 | 0.015 | 0.006 |

*$1 lb/ft^2 = 4.88 kg/m^2$

1 Mannich reaction product.
2 Nonylphenol ethoxylated with about 20 moles ethylene oxide.
3 Benzylquinolinium chloride.
4 Aromatic naphtha.
5 Propargyl alcohol.
* 2 ml Isopropyl alcohol was used as a solvent to prevent separation of the component

The results of the above tests show that addition of an acetylenic alcohol, quaternary ammonium compound and/or aromatic hydrocarbon having high oil wetting characteristics does not substantially decrease and, in some cases, actually improves the protection against corrosion achieved by the inventive corrosion inhibiting composition. The results also show that the inventive corrosion inhibitor was just as effective as the prior art corrosion inhibitor in reducing corrosion by the acid. The Mannich reaction product employed in the inventive corrosion inhibitor is just as effective as the acetylenic alcohol/quaternary ammonium compound/aromatic hydrocarbon admixture in activating the antimony, Column B.

Thus, the combination of the claimed reaction product with a source of antimony ions capable of activation by the reaction product very effectively reduces the corrosive effects of a hydrochloric acid solution in contact with metal surfaces, even at high temperatures.

Example I clearly demonstrates the enhanced protection provided by the antimony and the broad classes of substitutes for the components forming the reaction product. Example II demonstrates the utility of antimony in the various forms in which it is available. Example III shows that antimony alone does not reduce the corrosive effect of the acid further supporting the synergistic relationship between the reaction product and the antimony. Example IV shows that an acetylenic alcohol, quaternary ammonium compound and aromatic hydrocarbon having high oil wetting characteristics can be used to broaden the utility of the inventive corrosion inhibitor without reducing the effectiveness thereof. Finally, Example IV also shows that the inventive corrosion inhibitor is just as effective as the prior art corrosion inhibitor disclosed in US-A-4,498,997 in reducing corrosion by the acid.

## Claims

1. A method of acidizing a subterranean formation penetrated by a well bore whereby the corrosive effect of an acidic solution on metal present in said well bore is minimized, said method comprising contacting said formation with an aqueous acidic solution comprising hydrochloric acid which contains a corrosion-reducing effective amount of a corrosion inhibitor, said corrosion inhibitor consisting essentially of a blend of a source of antimony ions and a reaction product, said reaction product being prepared by reacting at least four reaction constituents together in the presence of from 0.8 to 1.2 equivalents of an aqueous mineral acid catalyst at a temperature in the range of from 140°F (60°C) to 250°F (121°C) for a time of from 4 hours to 48 hours to thereby yield said reaction product; wherein at least one of said four reaction constituents is one equivalent of a group (i) compound, at least one of said four reaction constituents is from 0.6 to 10 equivalents of a group (ii) compound, at least one of said four reaction constituents is from 0.5 to 10 equivalents of a group (iii) compound and at least one of said four reaction constituents is from 0.10 to 10 equivalents of a group (iv) compound, and further wherein each of said reaction constituents are from different compounds; and wherein said group (i) compounds have at least one reactive hydrogen atom and have no groups reactive under the conditions of reaction other than hydrogen and include compounds selected from amines, amides, aldehydes, nitrogen heterocycles, ketones, phenols, acetylenic alcohols and substituted derivatives thereof; said group (ii) compounds include a carbonyl group and have at least one hydrogen atom on the carbon atom adjacent to the carbonyl group; said group (iii) compounds are aldehydes, and said group (iv) compounds are selected from fatty compounds having from 5 to 60 carbon atoms, alkyl nitrogen heterocycles having at least one alkyl group having from 1 to 18 carbon atoms, and 3 to 9 carbon atoms in the heterocyclic ring structure, and admixtures thereof.

2. A method according to claim 1, wherein said source of antimony ions comprises at least one of antimony trioxide, pentoxide, trichloride, pentachloride, trifluoride, pentafluoride, tartrate, citrate, alkali metal salts of antimony tartrate or citrate, alkali metal salts of pyroantimonate, antimony adducts of ethylene glycol and solutions containing (i) ethylene glycol, (ii) water and (iii) the product of hydrogen peroxide and a

source of trivalent antimony ions.

3. A method according to claim 1 or 2, wherein said antimony ion is present in said inhibitor in an amount of from 0.0001 to 0.1 molar with respect to said hydrochloric acid solution.

4. A method according to claim 1,2 or 3, wherein said group (i) compounds have at least one reactive hydrogen atom attached to nitrogen and have no groups reactive under the conditions of reaction other than said hydrogen atom attached to nitrogen, and include compounds selected from the group consisting of amines, amides, nitrogen, heterocycles, and substituted derivatives thereof.

5. A method according to claim 1,2,3 or 4, wherein said aqueous acidic solution also comprises a quaternary ammonium compound, an acetylenic alcohol, an aromatic hydrocarbon having high oil wetting characteristics, or a dispersing surfactant, or any mixture of two or more thereof.

6. A method according to any preceding claim, wherein said group (i) compound is thiourea, said group (ii) compound is acetophenone, said group (iii) compound is formaldehyde, said group (iv) compound is oleic acid.

7. A method according to any preceding claim, wherein said source of antimony ions is a solution containing ethylene glycol, water and the oxidized product of hydrogen peroxide and antimony trioxide.

8. A method according to claim 5, wherein the aqueous acidic solution comprises a compound selected from methylnaphthylquinolinium chloride, nonylphenol ethoxylated with about 20 moles of ethylene oxide and mixtures of two or more thereof.

9. A method according to any of claims 1 to 8, wherein said corrosion inhibitor is present in said solution in an amount in the range of 1 to 20 volumes inhibitor per 1000 volumes of aqueous acidic solution.

10. A method according to claim 1, wherein said group (i) compound is selected from urea, guanidine carbonate, ammonium chloride, 2-picoline, quinaldine, morpholine, dibutylamine, butylamine, oleamide, tetraethylammonium chloride, 4-picoline, quinoline, cocoamine, dicocoamine and hexahydropyrimadine-2-thione; said group (ii) compound is acetophenone; said group (iii) compound is formaldehyde; and said group (iv) compound is oleic acid.

## Patentansprüche

1. Ein Verfahren zur Säuerung einer unterirdischen Schichtengruppe, die von einem Bohrloch durchdrungen wird, wobei die korrosive Wirkung einer sauren Lösung auf im Bohrloch vorhandenes Metall verringert wird und die besagte Methode darin besteht, daß die Schichtengruppe mit einer wäßrigen sauren Lösung kontaktiert wird, die Salzsäure enthält, die eine Korrosionsminderung bewirkende Menge eines Korrosionsinhibitors enthält, wobei der Korrosionsinhibitor im wesentlichen aus einer Mischung von einer Quelle von Antimonionen und einem Reaktionsprodukt besteht, wobei das Reaktionsprodukt durch Reagieren von wenigstens vier Reaktionskonstituenten in Gegenwart von 0,8 bis 1,2 Äquivalenten eines wäßrigen Mineralsäurekatalysators bei einer Temperatur im Bereich von 60 °C (140 °F) bis 121 °C (250 °F) für die Dauer von 4 Stunden bis 48 Stunden zum Erhalt dieses Reaktionsprodukts hergestellt wird; wobei wenigstens eine der vier genannten Reaktionskonstituenten ein Äquivalent einer Verbindungsgruppe (i) ist, wenigstens eine der genannten Reaktionskonstituenten von 0,6 bis 10 Äquivalente einer Verbindungsgruppe (ii) ist, wenigstens eine der vier Reaktionskonstituenten von 0,5 bis 10 Äquivalente einer Verbindungsgruppe (iii) ist und wenigstens eine der genannten vier Reaktionskonstituenten von 0,10 bis 10 Äquivalente einer Verbindungsgruppe (iv) ist, und wo weiter jede der genannten Reaktionskonstituenten von unterschiedlichen Verbindungen stammt, und wobei die genannte Verbindungsgruppe (i) wenigstens ein reaktives Wasserstoffatom und keine Gruppen aufweist, die unter den Reaktionsbedingungen reaktiv sind, mit Ausnahme von Wasserstoff, und ausgewählte Verbindungen von Aminen, Amiden, Aldehyden, Stickstoffheterozyklen, Ketonen, Phenolen, Acetylenalkoholen und substituierte Derivate hiervon enthält, und die genannte Verbindungsgruppe (ii) eine Carbonylgruppe und wenigstens ein Wasserstoffatom am Kohlenstoffatom neben der Carbonylgruppe aufweist, und Verbindungsgruppe (iii) aus Aldehyden besteht, und die genannten Verbindungen der Gruppe (iv) aus Fettverbindungen ausgewählt werden, die von 5 bis 60 Kohlenstoffatome aufweisen, Alkylstickstoffheterozyklen mit wenigstens einer Alkylgruppe,

die von 1 bis 18 Kohlenstoffatome und 3 bis 9 Kohlenstoffatome in der heterozyklischen Ringstruktur sowie Beimischungen hiervon aufweisen.

2. Ein Verfahren laut Anspruch 1, wobei die genannte Antimonionen-Quelle wenigstens eines von Antimontrioxid, Pentoxid, Trichlorid, Pentachlorid, Trifluorid, Pentafluorid, Tartrat, Zitrat, Alkalimetallsalze von Antimontartrat oder Zitrat, Alkalimetallsalze von Pyroantimonat, Antimonaddukte von Ethylenglykol und Lösungen mit (1) Ethylenglykol, (ii) Wasser und (iii) dem Produkt von Wasserstoffpyroxid und eine Quelle von trivalenten Antimonionen enthält.

3. Eine Methode nach Anspruch 1 oder 2, bei der besagtes Antimonion in besagtem Inhibitor in einer Menge von 0,0001 bis 0,1 Mol, bezogen auf die besagte Salzsäurelösung vorhanden ist.

4. Eine Methode nach Anspruch 1, 2 oder 3, wobei besagte Verbindungsgruppe (i) wenigstens ein reaktives Wasserstoffatom an Stickstoff gebunden und keine Gruppen hat, die unter den Reaktionsbedingungen reaktiv sind, mit Ausnahme von dem an Stickstoff gebundenen Wasserstoffatom, sowie Verbindungen einschließt, die aus der Amine, Amide, Stickstoff, Heterozyklen und substituierte Derivate enthaltenden Gruppe ausgewählt sind.

5. Eine Methode nach Anspruch 1, 2, 3 oder 4, wobei besagte wäßrige saure Lösung auch eine quaternäre Ammoniumverbindung, einen Acetylenalkohol, einen aromatischen Kohlenwasserstoff mit hohen Ölbenetzungseigenschaften oder ein dispergierendes Surfaktant oder eine Mischung von zwei oder mehreren hiervon aufweist.

6. Eine Methode nach einem der vorhergehenden Ansprüche, bei der die besagte Verbindungsgruppe (i) Thioharnstoff, die besagte Verbindungsgruppe (ii) Acetophenon, die besagte Verbindungsgruppe (iii) Formaldehyd und besagte Verbindungsgruppe (iv) Oleinsäure ist.

7. Eine Methode nach einem der vorherigen Ansprüche, wobei die besagte Antimonionen-Quelle eine Lösung ist, die Ethylenglykol, Wasser und das oxidierte Produkt von Wasserstoffperoxid und Antimontrioxid enthält.

8. Eine Methode nach Anspruch 5, wobei die wäßrige saure Lösung eine Verbindung enthält, die aus Methylnaphtylchinoliniumchlorid, Nonylphenol, ethoxyliert mit etwa 20 Mol Ethylenoxid, und Mischungen von zwei oder mehreren hiervon ausgewählt wird.

9. Eine Methode nach einem der Ansprüche 1 bis 8, wobei der besagte Korrosionsinhibitor in der besagten Lösung mit einer Menge im Bereich von 1 bis 20 Volumen Inhibitor je 1000 Volumen wäßriger saurer Lösung vorhanden ist.

10. Eine Methode nach Anspruch 1, wobei besagte Verbindungsgruppe (i) aus Harnstoff, Guanidincarbonat, Ammoniumchlorid, 2-Pikolin, Chinaldin, Morpholin, Dibutylamin, Butylamin, Oleamid, Tretraethylammoniumchlorid, 4-Pikolin, Chinolin, Kokoamin, Dikokoamin und Hexahydropyrimadin-2-Thion gewählt wird, die besagte Verbindungsgruppe (ii) Acetophenon ist, die besagte Verbindungsgruppe (iii) Formaldehyd ist, und besagte Verbindungsgruppe (iv) Oleinsäure ist.

## Revendications

1. Une méthode d'acidification des formations souterraines percées par une tige de forage grâce à laquelle l'effet corrosif d'une solution d'acide sur les métaux du puits de forage est minimisé. Cette méthode consiste à mettre en contact la formation avec une solution aqueuse d'acide chlorhydrique contenant un inhibiteur capable de réduire la corrosion de façon efficace. Cet inhibiteur est essentiellement composé d'un mélange d'une source d'ions antimoine et du produit d'une réaction. Ce produit est préparé en faisant réagir au moins quatre composants ensemble en présence de 0,8 à 1,2 équivalents d'un catalyseur acide minéral à une température pouvant aller de 60°C à 121°C et ce pour une durée de 4 à 48 heures. Pour préparer ce produit, le mélange réactionnel est constitué selon les proportions suivantes : 1 équivalent d'un composé du groupe I, 0,5 à 10 équivalents d'un composé du groupe II, 0,5 à 10 équivalents d'un composé du groupe III et 0,1 à 10 équivalents d'un composé du groupe IV. Les composés du groupe I ont au moins un atome d'hydrogène actif et aucun autre groupement réactif sous les conditions de la

réaction que cet atome d'hydrogène. Ces composés sont choisis parmi les amides, les amines, les aldéhydes, les hétérocycles azotés, les cétones, les phénols, les alcools acétylèniques et leurs dérivés substitués. Les composés du groupe II possèdent un groupe carbonyle avec au moins un atome d'hydrogène sur l'atome de carbone adjacent au groupement carbonyle. Les composés du groupe III sont des aldéhydes. Les composés du groupes IV sont choisis parmi les composés gras ayant de 5 à 60 atomes de carbone ou les hétérocycles azotés substitués sur l'azote par des groupements alkyles dont au moins un possède de 1 à 18 atomes de carbones, le cycle contenant de 3 à 9 atomes de carbone et leurs mélanges.

2. Une méthode en accord avec le point 1, où la source d'ions antimoine est choisie parmi les composés suivants : trioxyde, pentoxyde, trichlorure, pentachlorure, trifluorure, pentafluorure, tartrate ou citrate d'antimoine ; sels de tartrate ou de citrate d'antimoine et de métal alcalin ; sels de pyroantimoniate de métal alcalin, produits de l'addition d'antimoine et d'éthane-1,2-diol et une solution contenant (i) de l'éthane-1,2-diol, (ii) de l'eau et (iii) le produit du péroxyde d'hydrogène sur une source d'ions antimoine trivalents.

3. Une méthode en accord avec les points 1 ou 2, où la concentration des ions antimoine dans cet inhibiteur doit être de 0,0001 à 0,1 mol/l par rapport à la solution d'acide chlorhydrique.

4. Une méthode en accord avec les points 1,2 ou 3 où les composés du groupe I ont au moins un atome réactif d'hydrogène lié à l'azote et comportent des composés sélectionnés parmi les amines, les amides, les hétérocycles azotés et leurs dérivés substitués.

5. Une méthode en accord avec les points 1,2,3 ou 4 qui consiste à ajouter à la solution aqueuse d'acide un composé d'ammonium quaternaire, un alcool acétylènique et un composé aromatique à fort pouvoir mouillant d'huile, ou un agent de dispersion, ou tout mélange de deux ou plus de ces composés.

6. Une méthode qui, en accord avec tous les points précédents, consiste à utiliser comme composé du groupe I la thio-urée, l'acétophénone pour le groupe II, le méthanal pour le groupe III et l'acide oléique pour le groupe IV.

7. Une méthode qui, en accord avec tous les points précédents, consiste à utiliser comme source d'ions antimoine une solution contenant de l'éthane-1,2-diol, de l'eau et le produit oxydé du péroxyde d'hydrogène et du trioxyde d'antimoine.

8. Une méthode qui, en accord avec le point 5, consiste à ajouter à la solution aqueuse d'acide l'un des composés suivants : chlorure de méthylnaphtylquinolèinium, nonylphénol éthoxylé avec 20 moles d'oxyde d'éthylène ou leurs mélanges.

9. Une méthode qui, en accord avec tous les points de 1 à 8, consiste à utiliser l'inhibiteur de corrosion dans des proportions allant de 1 à 20 volumes d'inhibiteur pour 1000 volumes de solution aqueuse d'acide.

10. Une méthode qui, en accord au point 1, consiste à choisir le composé du groupe I parmi les composés suivants : urée, carbonate de guanidine, chlorure d'ammonium, 2-picoline, quinaldine, morpholine, dibutylamine, butylamine, oléamide [(Z)-octadéc-9-èn-1-amide], chlorure de tétraéthylammonium, 4-picoline, quinoléine, cocoamine, dicocoamine et héxahydropyrimidine-2-trione ; le composé du groupe II étant l'acétophénone, celui du groupe III le méthanal et celui du groupe IV l'acide oléïque.